Europäisches Patentamt

(19) European Patent Office

Office européen des brevets

(11) Publication number: **0 247 718**
**B1**

# EUROPEAN PATENT SPECIFICATION

(12)

(45) Date of publication of the patent specification:
22.11.90

(51) Int. Cl.⁵: **C04B 35/58**

(21) Application number: 87303254.4

(22) Date of filing: 14.04.87

(54) **Silicon nitride sintered bodies and a method of manufacturing the same.**

(30) Priority: 16.04.86 JP 85855/86

(43) Date of publication of application:
02.12.87 Bulletin 87/49

(45) Publication of the grant of the patent:
22.11.90 Bulletin 90/47

(84) Designated Contracting States:
DE FR GB IT SE

(56) References cited:
EP-A- 0 124 989
EP-A- 0 139 793
GB-A- 2 118 927
GB-A- 2 157 282
US-A- 4 388 414

JOURNAL OF THE AMERICAN CERAMIC SOCIETY,
vol. 62, no. 1/2, January/February 1979, pages 12-16,
Columbus, Ohio, US; T. MAH et al.: "The role of cerium
orthosilicate in the densification of Si3N4"
AMERICAN CERAMIC SOCIETY BULLETIN, vol. 58,
no. 8, August 1979, page 789, Columbus, Ohio, US; M.
MONTORSI et al.: "Silicon terbium oxynitride of
composition Tb4Si2O7N2"
AMERICAN CERAMIC BULLETIN, vol. 58, no. 2,
February 1979, pages 191-193, Columbus, Ohio, US; M.

(73) Proprietor: NGK INSULATORS, LTD., 2-56, Suda-cho,
Mizuho-ku, Nagoya City Aichi Pref.(JP)

(72) Inventor: Matsui, Minoru, 93 Yashirodai 1-chome
Meito-Ku, Nagoya City Aichi Pref.(JP)

(74) Representative: Paget, Hugh Charles Edward et al,
MEWBURN ELLIS & CO. 2/3 Cursitor Street, London
EC4A 1BQ(GB)

(56) References cited: (continuation)

HOCH et al.: "Preparation and characterization of
ultrafine powders of refractory nitrides: II, Sialon"
AMERICAN CERAMIC SOCIETY BULLETIN, vol. 62,
no. 12, December 1983, pages 1369-1374, Columbus,
Ohio, US; F.F. LANGE "Fabrication and properties of
dense polyphase silicon nitride"

The file contains technical information submitted after
the application was filed and not included in this
specification

## Description

The present invention relates to silicon nitride sintered bodies and can provide high density silicon nitride sintered bodies having excellent mechanical strength, acidic resistance and static fatigue resistance. The invention also relates to a method of manufacturing the such bodies.

Since silicon nitride sintered bodies have better mechanical strength, heat resistance, heat shock resistance and corrosion resistance than metallic materials, they have been examined for use in a variety of mechanical parts which operate at such high temperatures as prevent use of metallic materials, and uses of silicon nitride sintered bodies have been actively developed. The materials to be used in mechanical parts which are to operate at such high temperatures need to have excellent mechanical characteristics at high temperatures as well as high oxidation resistance and static fatigue resistance from the standpoint of the durability and dimensional stability during use of the parts for a long time period.

In order to obtain high density silicon nitride sintered bodies, there have been known a pressureless sintering process, a pressure sintering process, etc. Although various types of articles can be easily inexpensively mass-produced by the pressureless sintering process, this process has the drawbacks that the amount of a sintering aid necessary for obtaining high density is greater and high temperature strength and oxidation resistance are insufficient. On the other hand, although higher density sintered bodies can be obtained with less sintering aid by the pressure sintering process, this process has a fatal drawback that production cost becomes extremely high in the case of mass production of large size articles having complicated shapes.

In order to solve the above-mentioned problems, the present inventor et al have proposed in JP-A 6 054 976 silicon nitride sintered bodies having high density, high strength and excellent oxidation resistance.

However, although silicon nitride sintered bodies having high mechanical strength and oxidation resistance can be obtained by this method, silicon nitride sintered bodies which sufficiently satisfy a static fatigue characteristic (SCG characteristic) requirement, which is important when such bodies are in use as mechanical parts working particularly at high temperatures, cannot be obtained.

It is an object of the present invention to obviate the above-mentioned inconveniences and to provide silicon nitride sintered bodies which have high strength at high temperatures, excellent oxidation resistance and excellent static fatigue resistance and which can be fired in large quantities and in a large article size. A further object of the invention is also to provide a method of manufacturing the same.

The silicon nitride sintered body according to the present invention is set out in claim 1.

The method of manufacturing a silicon nitride sintered body according to the present invention is set out in claim 4.

The present invention is based on a novel acknowledgement that silicon nitride sintered bodies containing the J phase solid solution as an intergranular phase have improved mechanical strength and oxidation resistance as well as improved static fatigue resistance. Not only is the J phase solid solution present as the intergranular phase but also a crystalline phase of an apatite structure, a crystalline phase of a diopside structure and/or a glass phase may be coexistent with it. It is preferable however that substantially only the J phase solid solution is present as the crystalline phase in the intergranular phase. Further, the J phase solid solution can be deposited in the intergranular phase by firing the formulated powder of a particular composition and temperature-reduction after the firing or reheating a fired product.

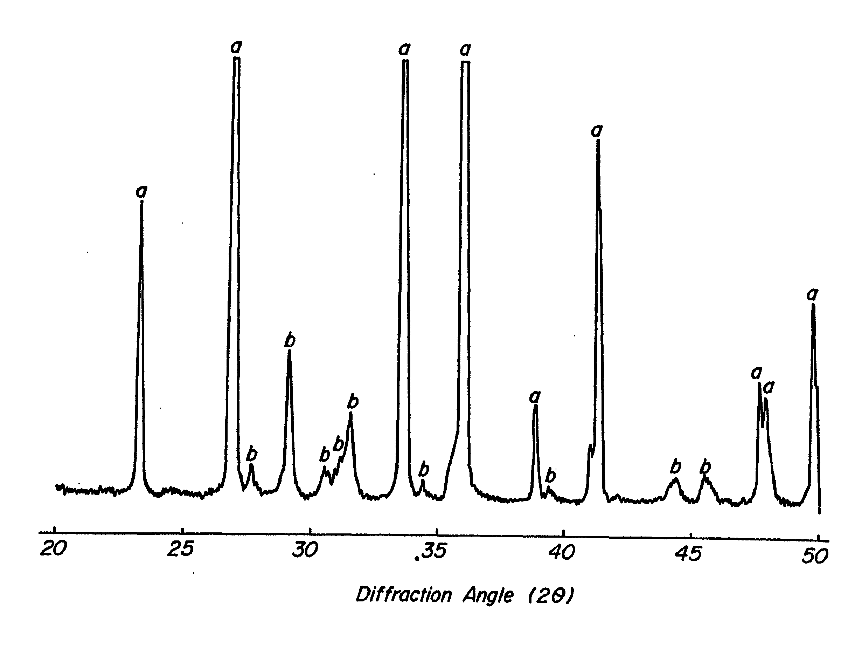

For a better understanding of the invention, reference is made to the attached drawing, wherein the sole figure is a diagram showing a result of an X-ray diffraction analysis of a silicon nitride sintered body according to the present invention, using a CuKα line.

Production of the intergranular crystals such as the J phase solid solution, etc. is influenced by the composition of additives, $SiO_2$ present in the raw material of $Si_3N_4$, the composition of $SiO_2$, etc. produced in a powder treating process, a fine structure formed under firing conditions, temperature-reduction conditions, and reheating conditions in combination. In particular, the formation of the J phase solid solution in the intergranular phase is promoted by the addition of $ZrO_2$. The composition must be chosen to produce the J phase under the process conditions.

The J phase solid solution is herein used to mean a crystal phase having caspidine structure of a monoclinic system represented by $M^I_3(M^{II}_2 M^{III}_7)M^I M^{IV}_2$ such as $Ca_3(Si_2O_7)CaF_2$. In the silicon nitride sintered body according to the present invention in which the intergranular phase is crystallized, the crystallographic position of $M^I$ is occupied by a rare earth element such as Y, the crystallographic position of $M^{II}$ is occupied by Si, and the crystallographic position of $M^{III}$ is occupied by O or N, while the crystallographic position of $M^{IV}$ is occupied by O or N.

These crystalline phases can be identified by a powder X-ray diffraction method, and have the same type diffraction curve as that of $Si_3N_4 \cdot 4Y_2O_3 \cdot SiO_2$ shown in JCPDS card No. 32-l45l.

In the following, a method of producing the silicon nitride sintered bodies which mainly consist of $Si_3N_4$ and in which the J phase solid solution is present in the intergranular phase is explained by way of example as follows:

First, a formulated powder is obtained by granulating and mixing a specific powdery raw material of silicon nitride, and a sintering aid consisting of for example $Y_2O_3$, MgO, $ZrO_2$ or an aqueous solution thereof. This granulating and mixing are preferably performed by a wet type or dry type ball mill, an attrition mill, or a vibration mill using $Si_3N_4$ media or nylon-coated iron media.

Next, in the case of the wet type granulation, a molding is obtained by drying a formulated powder and molding a dried powder. In the case of the dry type granulating, a molding is obtained by dry type pressing or injection molding. Alternatively, a molding is obtained by slip casting. The thus obtained molding is pressurelessly sintered or sintered under pressure at a temperature of 1,650 to 2,000°C in an atmosphere of $N_2$ or an inert gas to obtain a silicon nitride sintered body. Finally, a J phase solid solution is precipitated in an intergranular phase by reheating the thus obtained silicon nitride sintered body at 1,000 to 1,400°C. The J phase solid solution may be precipitated during the temperature-reduction step after the firing. In such a case, no reheating treatment is necessary.

In the following, examples of the present invention will be explained, but the invention should not be interpreted to be limited thereto.

Example I

A powdery raw material of silicon nitride having a purity of 97.1% by weight, average grain diameter of 0.7 μm, and BET specific surface area of 20 m²/g, and powdery raw materials of an oxide of a rare earth element, an oxide of an element other than the rare earth element, and $ZrO_2$ each having a purity of 99 to 98% by weight, average grain diameter of 1.4 to 0.6 μm, and BET specific surface area of 30 to 10 m²/g were used and formulated in the recipes shown in Table I. By using silicon nitride media having an outer diameter of 5 to 6 mm and a nylon resin vessel having an inner volume of 1.2 liters, 1.8 kg of the media and 300 ml of tap water were added to 150 g of the formulation raw material, which was granulated by a vibration mill at a vibration rate of 1,200 times/min for 3 hours. Then, water was evaporated to obtain a granulated molding powder having average grain diameter of 100 μm. Next, the molding powder was isostatically press molded into a shape of 60×60×6 mm at a pressure of 3 tons/cm². The resulting molding was pressurelessly sintered at a firing temperature of 1,700°C in a nitrogen atmosphere for 1 hour, and then reheated at 1,200°C in a nitrogen atmosphere for 2 hours. By so doing, silicon nitride sintered bodies Nos. I-10 according to the present invention were obtained. Apart from the above, silicon nitride sintered bodies falling outside the scope of the present invention were prepared under the same conditions, thereby obtaining sintered bodies Nos. II-19 as Comparative Samples. With respect to the thus obtained sintered bodies, the intergranular crystalline phase, a relative density, four point bending strengths at room temperature, 800°C, and 1,200°C, and maximum stress (as a static fatigue characteristic) at which a test piece was not fractured when maintained at 800°C for 1,000 hours under a given load are shown in Table I. In Table I, the intergranular crystalline phases of the sintered body were identified from an X-ray diffraction analysis using a CuKα line, and the density was determined by an Archimedes method. The four point bending strength was measured by a "Fine ceramics bending strength testing method" of JIS R1601. Further, with respect to the measurement of the fatigue characteristics, the stress at which a test piece having the same dimension as in the measurement of the four point bending strength measurement was not fractured when maintained at 800°C for 1,000 hours under the above load was examined by the same method. J, A and D in Table I are the J phase solid solution, an apatite phase, and a diopside phase, respectively. The apatite phase is a crystalline phase of an apatite structure having the same type diffraction curve as $Si_3N_4 \cdot 10Y_2O_3 \cdot 9SiO_2$ expressed by JCPDES card No. 30-1462 in the powder X-ray diffraction analysis. The diopside phase is a crystalline phase of a diopside structure having the same type diffraction curve as $CaO \cdot MgO \cdot 2SiO_2$ shown in JCPDS card No. 11-654 in the powder X-ray diffraction analysis.

Table 1(a)

| | No. | Formulated composition (wt%) | | | | Crystalline phase at grain boundaries | Relative density (%) | Four point bending strength (MPa) | | | Static fatigue characteristics |
| | | Si₃N₄ | Oxide of rare earth element | Oxide other than rare earth element oxide | ZrO₂ | | | Room temperature | 800°C | 1200°C | Maximum stress under which test piece did not fracture when exposed at 800°C for 1000 hrs (MPa) |
|---|---|---|---|---|---|---|---|---|---|---|---|
| Present Invention | 1 | 93.5 | Y₂O₃   6 | — | 0.5 | J | 96 | 820 | 820 | 840 | 775 |
| | 2 | 89 | Y₂O₃   10 | — | 1 | J | 96 | 860 | 830 | 850 | 800 |
| | 3 | 93.5 | CeO₂   6 | — | 0.5 | J | 96 | 750 | 750 | 560 | 700 |
| | 4 | 89 | CeO₂   10 | — | 1 | J | 95 | 790 | 770 | 530 | 725 |
| | 5 | 93.5 | Nd₂O₃   6 | — | 0.5 | J | 97 | 780 | 790 | 770 | 750 |
| | 6 | 89 | Nd₂O₃   10 | — | 1 | J | 96 | 800 | 790 | 760 | 750 |
| | 7 | 93.5 | Er₂O₃   6 | — | 0.5 | J | 96 | 790 | 800 | 780 | 750 |
| | 8 | 89 | Er₂O₃   10 | — | 1 | J+A | 95 | 810 | 790 | 770 | 725 |
| | 9 | 93.5 | Yb₂O₃   6 | — | 0.5 | J+D | 97 | 800 | 800 | 730 | 750 |
| | 10 | 89 | Yb₂O₃   10 | — | 1 | J | 97 | 800 | 790 | 780 | 750 |

Table 1(b)

| | No. | Formulated composition (wt%) | | | | Crystalline phase at grain boundaries | Relative density (%) | Four point bending strength (MPa) | | | Static fatigue characteristics |
|---|---|---|---|---|---|---|---|---|---|---|---|
| | | Si3N4 | Oxide of rare earth element | Oxide other than rare earth element oxide | ZrO2 | | | Room temperature | 800°C | 1200°C | Maximum stress under which test piece did not fracture when exposed at 800°C for 1000 hrs (MPa) |
| Comparative Sample | 11 | 90 | Y2O3    10 | – | – | A | 95 | 830 | 830 | 800 | 450 |
| | 12 | 90 | CeO2    10 | – | – | A | 94 | 800 | 810 | 780 | 400 |
| | 13 | 90 | Nd2O3   10 | – | – | A | 95 | 780 | 780 | 790 | 400 |
| | 14 | 90 | Er2O3   10 | – | – | A | 96 | 820 | 810 | 800 | 350 |
| | 15 | 90 | Yb2O3   10 | – | – | A | 95 | 830 | 800 | 800 | 375 |
| | 16 | 89 | – | MgO     10 | 1 | – | 95 | 750 | 750 | 700 | 300 |
| | 17 | 90 | – | MgO     10 | – | – | 94 | 730 | 700 | 600 | 275 |
| | 18 | 89 | – | Al2O3   10 | 1 | – | 90 | 680 | 670 | 530 | 250 |
| | 19 | 90 | – | Al2O3   10 | – | – | 89 | 650 | 660 | 510 | 275 |

A diffraction curve of the silicon nitride sintered body No. I of Table 1 according to the present invention in an X-ray diffraction analysis using CuKα line is shown in Fig. I. In the diffraction curve, diffraction peaks denoted by "a" are those of β-Si₃N₄, and diffraction peaks denoted by "b" coincide with plane spaces of the J phase solid solution $Si_3N_4 \cdot 4Y_2O_3 \cdot SiO_2$ shown in JCPDS card No. 32-I45I.

As is apparent from Table I and Fig. I, the sintered bodies containing $Si_3N_4$, an oxide of a rare earth element and $ZrO_2$ within the present invention which precipitate the J phase solid solution as an intergranular phase have high strength at room temperature and I,200°C and excellent static fatigue characteristic, while they are substantially free from reduction in strength after lapse of time of I,000 hours at 800°C. Thus, it was found that the silicon nitride sintered bodies according to the present invention are superior as compared with the Comparative Samples. Further, it was found that the silicon nitride sintered boiesy Nos. I and 2 according to the present invention containing $Y_2O_3$ as a rare earth element oxide were excellent particularly in the four point bending strength at I,200°C.

Example 2

A powdery raw material of silicon nitride having a purity of 97.I% by weight, average grain diameter of 0.7 μm, and BET specific surface area of 20 m²/g and powdery raw materials of $Y_2O_3$, MgO, and $ZrO_2$ each having a purity of 99 to 98% by weight, average grain diameter of I.4 to 0.6 μm and BET specific surface area of 30 to I0 m²/g were used and formulated in the recipes shown in Table 2, and moldings were prepared by the same method as in Example I. The moldings were pressurelessly sintered at a firing temperature shown in Table 2 in a nitrogen atmosphere for one hour, and then reheated at I,200°C in a nitrogen atmosphere for 2 hours, thereby obtaining silicon nitride sintered bodies Nos. 20 to 28 according to the present invention. With respect to the thus obtained sintered bodies, the intergranular crystalline phase, the relative density, four point bending strengths at room temperature, 800°C and I,200°C, and the maximum stress (as a static fatigue characteristic) at which a test piece was not fractured when maintained at 800°C for I,000 hours under a given load are shown in Table 2. The intergranular crystalline phase, the relative density, the four point bending strength, and the static fatigue characteristic of the sintered bodies were measured by the same methods as in Example I. In Table 2, J, A and D have the same meanings as in Table I.

Table 2

| No. | Formulated composition (wt%) | | | | Firing temperature (°C×1hr) | Crystalline phase at grain boundaries | Relative density (%) | Four point bending strength (MPa) | | | Static fatigue characteristics — Maximum stress under which test piece did not fracture when exposed at 800°C for 1000 hrs (MPa) |
|---|---|---|---|---|---|---|---|---|---|---|---|
| | $Si_3N_4$ | $Y_2O_3$ | MgO | $ZrO_2$ | | | | Room temperature | 800°C | 1200°C | |
| 20 | 93.5 | 4 | 2 | 0.5 | 1700 | J | 96 | 800 | 790 | 580 | 750 |
| 21 | 90.7 | 5 | 4 | 0.3 | 1700 | J | 97 | 900 | 890 | 870 | 850 |
| 22 | 89 | 5 | 5 | 1 | 1700 | J | 97 | 940 | 940 | 950 | 875 |
| 23 | 89.5 | 6 | 4 | 0.5 | 1680 | J | 98 | 980 | 970 | 970 | 925 |
| 24 | 89.7 | 4 | 6 | 0.3 | 1680 | J | 96 | 920 | 900 | 920 | 850 |
| 25 | 91 | 3 | 5 | 1 | 1680 | J+A | 96 | 890 | 890 | 870 | 850 |
| 26 | 91.5 | 7 | 2 | 0.5 | 1660 | J+D | 97 | 900 | 900 | 800 | 825 |
| 27 | 88.7 | 8 | 3 | 0.3 | 1660 | J | 96 | 930 | 920 | 930 | 875 |
| 28 | 93 | 3 | 3 | 1 | 1660 | J | 95 | 810 | 790 | 560 | 750 |

Present invention

As Table 2 shows, the silicon nitride sintered bodies containing $Si_3N_4$, $Y_2O_3$, MgO and $ZrO_2$ according to the present invention precipitating the J phase solid solution as an intergranular phase have relative density of not less than 95%, have four point bending strength at room temperature of not less than 800 MPa at room temperature and not less than 500 MPa at l,200°C and also have excellent static fatigue characteristic. They are substantially free from the reduction in strength after the lapse of time of l,000 hours at 800°C.

As having been mentioned in the above, in the silicon nitride sintered body and the manufacturing method thereof according to the present invention, $Si_3N_4$, $Y_2O_3$, for example and $ZrO_2$ are present and the J phase solid solution is precipitated as an intergranular phase, so that silicon nitride sintered bodies having extremely excellent density, mechanical strength, oxidation resistance and fatigue characteristic can be obtained. Since the silicon nitride sintered bodies according to the present invention can be industrially obtained at low cost, they can be used in a variety of an applications such as mechanical structural materials for engine parts, gas turbine parts, etc.

## Claims

1. A silicon nitride sintered body consisting essentially of $Si_3N_4$ as main component, at least one oxide of a rare earth element and $ZrO_2$, and optionally MgO, wherein a J phase solid solution is present as an intergranular phase.

2. A silicon nitride sintered body according to claim 1, wherein the oxide of the rare earth element is $Y_2O_3$.

3. A silicon nitride sintered body according to claim 1 or claim 2 which contains MgO and wherein the relative density and the four point bending strength at 1,200°C in air of the sintered body are not less than 95% and 500 MPa, respectively, while the silicon nitride sintered body is substantially free from reduction in the strength by exposure to air at 800°C.

4. A method of manufacturing a silicon nitride sintered body, which comprises:
formulating a powder consisting essentially of a powdery silicon nitride raw material, at least one oxide of a rare earth element and $ZrO_2$ as a sintering aid and optionally MgO;
molding the formulated powder into a molding;
firing the molding at a temperature from 1,650 to 2,000°C in a nitrogen or inert gas atmosphere; and
precipitating a J phase solid solution as an intergranular phase of the fired body by a temperaturereduction step or a reheating step.

5. A method according to claim 5, wherein the oxide of the rare earth element is $Y_2O_3$.

## Revendications

1. Corps fritté en nitrure de silicium comprenant essentiellement $Si_3N_4$ comme composé principal, au moins un oxyde d'un élément de terres rares et $ZrO_2$, et facultativement MgO, caractérisé en ce qu'une solution solide de phase J est présente comme phase intergranulaire.

2. Corps fritté en nitrure de silicium selon la revendication 1, caractérisé en ce que l'oxyde de l'élément de terres rares est $Y_2O_3$.

3. Corps fritté en nitrure de silicium selon la revendication 1 ou 2 qui contient MgO et est caractérisé en ce que la densité relative et la résistance à la flexion en quatre points à 1200°C dans l'air du corps fritté ne sont pas moindres que 95% et 500 MPa, respectivement tandis que le corps fritté en nitrure de silicium est sensiblement dépourvu de diminution de résistance par exposition à l'air à 800°C.

4. Procédé de fabrication d'un corps fritté en nitrure de silicium, caractérisé en ce qu'il consiste à:
préparer une formule de poudre comprenant essentiellement un matériau brut pulvérulent de nitrure de silicium, au moins un oxyde d'un élément de terres rares et $ZrO_2$ comme aide pour le frittage et facultativement MgO;
mouler la poudre de façon à obtenir un moulage;
chauffer le moulage à une température comprise entre 1650 et 2000°C dans une atmosphère d'azote ou de gaz inerte; et
précipiter une solution solide de phase J comme phase intergranulaire du corps chauffé par une phase opératoire de réduction de la température ou de réchauffage.

5. Procédé selon la revendication 5, caractérisé en ce que l'oxyde de l'élément de terres rares est $Y_2O_3$.

## Patentansprüche

1. Gesinterter Siliziumnitridkörper, bestehend im wesentlichen aus $Si_3N_4$ als Hauptkomponente, mindestens einem Oxid eines seltene Erden Elementes und $ZrO_2$ und wahlweise MgO, wobei eine feste Lösung der J Phase als Zwischenkornphase vorhanden ist.

2. Gesinterter Siliziumnitridkörper nach Anspruch 1, wobei das Oxid des seltene Erden Elementes $Y_2O_3$ ist.

3. Gesinterter Siliziumnitridkörper nach Anspruch 1 oder 2, der MgO enthält, und wobei die relative Dichte und die Vierpunkt-Biegefestigkeit des gesinterten Körpers bei 1200°C in Luft nicht weniger als 95% bzw. 500 MPa beträgt, während die Festigkeit des Siliziumnitridkörpers im wesentlichen nicht abnimmt, wenn er Luft bei 800°C ausgesetzt wird.

4. Verfahren zur Herstellung eines gesinterten Siliziumnitridkörpers, umfassend:

Ansetzen eines Pulvers, das im wesentlichen aus pulverförmigem Siliziumnitrid als Rohmaterial, mindestens einem Oxid eines seltene Erden Elementes und $ZrO_2$ als Sinterhilfe und wahlweise MgO besteht;

Einbringen des angesetzten Pulvers in eine Form;

Brennen der Form bei einer Temperatur im Bereich von 1650 bis 2000°C in einer Atmosphäre aus Stickstoff oder einem Inertgas; und

Ausscheiden einer festen Lösung der J Phase als Zwischenkornphase des gebrannten Körpers bei einem Temperaturabsenkschritt oder einem Wiederaufheizschritt.

5. Verfahren nach Anspruch 4, wobei das Oxid der seltene Erden Elemente $Y_2O_3$ ist.